# EUROPEAN PATENT APPLICATION

(11) **EP 1 356 732 A1**
(43) Date of publication of application: **29.10.2003**
(21) Application number: 02009131.0
(22) Date of filing: 24.04.2002
(51) Int. Cl.: A01N 25/34, E03B 11/02

(54) **Protective cover for food and water storage containers**

(71) Applicant: DCT ApS, 6000 Kolding (DK)
(72) Inventor: Vestergaard Frandsen, Mikkel, 6000 Kolding (DK); Vestergaard Frandsen, Torben, 6000 Kolding (DK); Skovmand, Ole, 34070 Montpellier (FR)
(74) Representative: Nielsen, Leif

(57) **Abstract**

An insect barrier comprising a net, textile, or textile based filter with an insecticide for long lasting efficiency to cover containers, for example water jars. The insect barrier may be provided with a frame fitting to the border of the opening of the water container.

## Description

### Field of the Invention

The present invention relates to an insect proof container for storing goods, preferably food and water, especially in regions with high risk for vector born diseases

### Background of the Invention

Dengue fever (DF), dengue hemorrhagic fever (DHF) and dengue shock syndrome (DSS) are posing an increasing threat to the tropical and subtropical world. More than 100 countries are dealing with outbreaks and 2.5 billion people are currently suffering form the disease. WHO predicted that the worsening epidemiological trend is likely to continue. This is due to the increase in human movement and unplanned urbanization resulting in the increase in proliferation of man-made *Aedes aegypti* and *Ae. albopictus* breeding habitats. In the WHO Global Strategy for prevention and control of dengue fever and DHF 1995, selective integrated vector control with community and in-tersectorial participation was highlighted as the top priority among the five elements.

Despite the increase in public health interventions to combat dengue fever and DHF, the control of its most important vector, *Aedes aegypti*, for the last few decades has not been very promising. In fact, its control has been described as one of the conspicuous failures of the 20^{th} century. The absence of proven, sustainable vector control methods and limited national and global resources are among the main contributory factors for this failure. Many countries' control programs lack an effective long-term breeding site management strategy and employ only the epidemic control, of which the application of insecticides against the adult vector is the mainstay. This mosquito species is also the most important vector of yellow fever. Thirty-three countries, with a combined population of 508 million, are at risk in Africa. These lie within a band from 15°N to 10°S of the equator. In the Americas, yellow fever is endemic in nine South American countries and in several Caribbean islands. Bolivia, Brazil, Colombia, Ecuador and Peru are considered at greatest risk.

There are 200,000 estimated cases of yellow fever (with 30,000 deaths) per year. Small numbers of imported cases also occur in countries free of yellow fever. Although yellow fever has never been reported from Asia, this region is at risk because the appropriate primates and mosquitoes are present. The disease was previously present in Europe.

Another important vector that have recently spread worldwide and also to Europe is *Aedes albopictus*. This species is also a vector of dengue virus and yellow fever virus, though often less efficacious than *Ae. aegypti*. Both species are "container breeders". In some areas, the two compete for the same breeding sites, in other areas with longer co-existence, there is a habitat selection where Ae. aegypti breed in house and *Ae. albopictus* out side, but both have the same biting patterns (aggressive day biters) and are thus difficult to control with bednets and the likes.

Elimination of *Aedes aegypti and albopictus* breeding sites is of paramount importance in the prevention and control of dengue and dengue hemorrhagic fever. In Cambodia, the single most common *Aedes aegypti* breeding sites are 200 liter - 400 liter water storage jars. A survey done in 1999-2000 revealed that water jars constitute over 80% of the total breeding sites, in both wet and dry seasons, for both urban and rural areas. Every effort should be made to prevent these water jars from becoming breeding sites. Clearly, community clean up campaigns will have little effect on the breeding of *Ae. aegypti* without proper protection of the permanent water storage jars that are the source of most breeding. The practice of emptying water jars weekly is seldom employed by the households due to the large size of the jars and/or the difficulty to obtain water. Abate (Temephos) 1 % sand granules proved effective for up to 8 weeks when dosed at 10g/100 liters of water. Operationally, the use of larvicides in dengue control is time-consuming and requires a large workforce for application and supervision. Long term use of Temephos will also accelerate the emergence of resistance to Temephos. Furthermore, the addition of an insecticide to drinking water is often not accepted by the inhabitants.

Use of water jar covers to deny access to oviposition female *Ae. aegypti* and *albopicus* is an attractive alternative. A preliminary study at two sites at Kandal Provinces suggested that households largely prefer to use jar covers for protection of water jars over other interventions. This can be sustainable and potentially an effective community-based vector control measure.

However, there is no standard jar cover that has been introduced as yet, and the common jar covers used by the households in Cambodia are wood, cement, or metal and do not fit well. These ill fitting jar covers are usually not mosquito proof, and provide shading, factors that may render water jars more attractive to the *Aedes aegypti* breeding.

A mesh screen for preventing insects from entering water tanks is known from US patent no. 5,816,288. This structure is rather expensive and is therefore not affordable by poor people in tropic countries. If such a cover is used by only some people in the population, still the insects may find breeding places where water jars are covered by less efficient screens or not covered. Furthermore, the screen as disclosed in US patent no. 5,816,288 has a solid cover, which prevents rain from entering the water tank. However, in tropic countries, where water is rare, the cover should allow rain to drain through, because the removal of the cover during rain may attract insects entering the tank.

### Summary of the Invention

It is the purpose of the invention to improve covers, preferably removable, for containers for strrong goods, preferably for food and water storage. It is a further purpose of the invention to provide a method for preventing mosquitoes to enter containers, especially to provide mosquito proof water containers that nevertheless allows water to drain in. Furthermore, the method and cover should be affordable and durable.

The main purpose is achieved by a method for providing an insect proof container for storing goods, preferably water, wherein said method comprises providing a container with an opening, preferably a substantially upwardly oriented opening, providing an insect barrier comprising a fine meshed net, textile or textile filter containing at least one insecticide, and covering said opening with said insect barrier for prohibiting insects, preferably mosquitoes, to enter said container.

As has turned out, which will be more apparent below, this method is extremely efficient for protecting goods, especially water, from mosquitoes or other insects. Independently of the size of the opening of the container, a fitting insect barrier with a net may easily be provided for covering the opening, because such nets may be cut into the right size or sewed together for achieving larger covers. Also, nets may easily be repaired when torn.

In practice, no constraints are on the opening type in order to be covered. For example, the opening may be upwardly oriented or may have en opening at the side of the container having a vertical border.

A number of further advantages are connected to this invention will become apparent in the following.

Normally, when an insect as a mosquito tries to enter the opening of a container and is prohibited because of a net or likewise, the insect will continue its attempts trying to find a hole in the cover. Therefore, as described above, it is very difficult to protect container for goods, especially water in tropic countries because, often, covers do not fit completely tight to the opening, or a small hole may accidentally be in the cover. Even if the insect is prohibited from entering the container, is will just fly away and find another breeding place, for example another jar. Therefore also, for preventing mosquitoes from breeding, covering of water jars itself is not sufficient. When an insect such as a grain beetle tries to enter a container with a textile cover, it may bore or gnaw its way through the textile. Moths like Indian meal moth may deposit eggs in the textile, and the larvae may enter the food source. Thus, textiles covering itself may not be effective, even though the textiles are tighly fitted to the container.

However, by providing an insect barrier with an insecticide according to the invention, the insect, for example mosquito, will receive the poison and die even though a passage through the barrier may be found by the insect. Thus, the insecticide prevents the insect not only to breed in or feed on the goods inside the container but it prevents the insect to breed and feed anywhere else. The insecticide may also be a sterilizing agent to obtain that the deposited eggs do not develop into adult insects, for example mosquitoes, and that the insect is rendered sterile.

A net that possibly may be used for such a cover is disclosed in International Patent Application WO01/37662 by Ole Skovmand assigned to DCT. Such net material is commercially available at low cost in tropic countries. The material, typically polyethylene or other man-made fibers, for the net is flexible, durable, and mechanically and chemically resistant. The net may be impregnated for long lasting efficiency where the impregnation may be repeated by surface treatment from time to time to assure proper functioning.

Using a net, textile, or textile based filter instead of a solid cover, reduces the weight of the insect barrier. This aspect is very important, because such insect barriers have to be transported to the place of use, for example in third world areas, where the infrastructure is not so well developed and transport often is achieved by airplanes. Thus, a reduction of the weight reduces the overall costs of the insect barrier. Because of its flexibility, a net can be stored very efficiently taking up only relatively small space, for example as large rolls of net, which also is important for the above mentioned transportation means. A net, textile, or textile based filter is also very easy to arrange around an opening, even if the border of the opening is not smooth or plane. Additionally, an insect barrier with a net, textile, or textile based filter according to the invention prevents dirt to enter the water container, especially the textile. If the filter is made sufficiently tight, it may also largely reduce bacterial contamination. Preferably however, the textile, or textile based filter according to the invention is water permeable such that rain water may drain through and into a collecting system.

A simple embodiment of the insect barrier may be a net of the above kind including means for exerting downward force to said barrier for keeping the barrier stretched over the opening, where it is now assumed that the opening is substantially upwardly oriented. This way, a tight contact to the border of the opening can be achieved when the opening is covered with the insect barrier. Those means may be weights that have been fastened to the flexible barrier. Alternatively, the means may comprise pockets to be filled with stones, sand or other weight material.

Alternatively, the net or textile may have a flexible rim, for example a rim made of tarpaulin. The tarpaulin may be used for fastening the weights or pockets to the insect barrier. Furthermore, the tarpaulin may also be designed to rest on the border of the container, for example a water jar, in order to prevent the net from being torn on eventually sharp edges of the border of the container, for example a metal drum used as a water jar.

The insect barrier may solely be flexible in order to ease transportation of the insect barrier. However, in some circumstances, the barrier may be desired to comprise a frame. In tropic countries, after delivery of the flexible part of the barrier, the population may itself build such a frame from the material at hand. An insect barrier according to the invention is easily mounted with a frame independently of the dimensions of the frame.

However, a frame may already be part of the insect barrier when delivered. For example, such a frame may be a circular metal or polymer frame covered with a net, textile or textile filter, eventually with a tarpaulin rim. A typical diameter of such a frame is around one meter. In order to ease transportation of this frame, the frame may comprise two identical, rigid parts connected by flexible means, for example the net, textile or textile filter itself, for folding the two parts together to ease transportation of the insect barrier. Preferably, the two parts of the frame are half-circles forming a complete circle when the insect barrier is stretched out.

The container and the corresponding frame may be such that the frame rest tightly on the border of the opening of the container. Alternatively, the opening may be received in the frame such that the frame surrounds the opening of the container. For example, the aforementioned circular frame may have a diameter slightly larger than the opening of the container. In this case, the flexible part of the insect barrier will rest on the border of the opening and the weight of the frame keeps the flexible part of the barrier stretched over the border of the opening with a tight contact between the insect barrier and the opening.

Alternatively, the insect barrier according to the invention may be arranged as an umbrella for covering the container opening in its open state. Such an insect barrier is easily contracted into a slim form for transportation and storage. A further alternative embodiment is achieved with a net, textile or textile filter equipped with an elasticcaly contractable rim in order to surround the wall of the opening in a tight manner.

Once an insect barrier is covering the opening, water or other liquid, may drain through the net of the barrier. For example, the container being a jar with an upwardly oriented opening, rain water may drain through the net and into the jar. On the other hand, water may also be poured out of the container through the net. Thus, the cover does not require to be removed in order to fill or empty a liquid container. According to the invention, water permeable textile or textile filter may be used in an analogue way. For storage of dry goods like grain, the textile may be treated to be hydrophobic and thus add to the physical protection of the goods.

In case that the goods to be stored is water, especially if rain is desired to drain through the barrier, it is an advantage if the at least one insecticide is insoluble in water. Also, the barrier with the net, textile or textile filter preferably does not contain detergents dissolving any of the insecticides by contact with water. In case, the water is not used for drinking, a low toxic insecticide may be used, which, in addition, may be partly water soluble, like Temephos.

The insect barrier may be treated with the at least one insecticide by surface treatment. An alternative treatment is incorporation of the insecticide inside the net fiber, typically during manufacture of the fiber. The insecticide may then migrate to the surface of the net fiber. This way, the insecticidal properties of the net is maintained for a long time without insecticide surplus on the surface.

In order to prevent or at least reduce UV disintegration of the insecticide, the insect barrier may contain a UV protective medium. This UV protecting medium may be located at the surface of the net fibers or may be incorporated in the fiber for migration to the surface of the fiber.

The insecticide is preferably an insect killing insecticide, for example Temephos or Deltamethrin. Also used may be various specific larvicides or growth inhibiting insecticides. However, the insecticide may also function in a more sophisticated way in that the insect is not killed after contact with the insecticide but remains sterile. Thus, the insect may still mate and produce egg, but the eggs do not produce larvae. Another option is an insecticide comprising the synthetic juvenile hormone Methopren, which kills larvae when they slough the skin.

An insect barrier of the above kind may as well be provided with a chemical Cholera filter which would result in an additional reduction of illness in tropic regions.

In order to manipulate the insecticidal effect of the insect barrier, it may be provided in special colours in order to attract certain insect species. Also, the insects barrier may be provided with selected insect attracting substances as pheromones or other attracting odours.

An efficacy study has been undertaken in connection with the insect barrier according to the invention. The net, 100% polyester, with the mesh size of 25/cm², Deltamethrin industrially impregnated with a dosage of 50 mg a.i./m² was used as insect barrier for jar lids. The lids comprised a PVC hoop with the impregnated fabrics stretched across.

The experimental designs took into the following considerations:
- that all the water jars used by the households were positioned under outdoor conditions,
- that it was likely that the net was partially submerged in the water inside the jar due to prolonged use of the insect barrier,
- that it was likely that the jars were positioned under a roof gutter and constantly subject to the flushing of rainwater from the roof.

While acknowledging the above factors, a worst case scenario was taken into account including the placing of the net cover submerged in the water jar over the study period of 3 months, and flushing the cover weekly.

Four 200- liters water jars, filled with rain water were maintained for the duration of study period. WHO standard Bioassay Cone was used to expose *Aedes aegypti* females on the insecticide containing net for 10 minutes. For each efficacy test, 10 two-day old *Aedes aegypti* females were used. The mosquito colony originated from larvae collected from Phnom Penh. The knock down effect (KD) and the mortality were recorded at 10 minutes interval for the first hour, and hourly for the following time. The total KD and mortality was assessed at the end of the 24 hour period after exposure. The tests were replicated on a weekly basis.

The jars recruited in the study were arranged in the following manners. One net was partially submerged in the water, one jar cover was without directly contact with the water, and one net was kept away from sunlight and rain.

Even after 8 weeks, the insect barriers with the insecticidal impregnated net still gave satisfactory results. It turned out that also the net submerged in water did not lose its potency even after 8 weeks. The results furthermore indicated that the total mortality after 24 hours from outdoor and indoor jars did not differ significantly.

The invention will be explained in more detail in the following with reference to the drawings.

### Short Description of the Drawings

- FIG. 1: shows a container with an insect barrier,
- FIG. 2: shows a water jar with an insect barrier without frame,
- FIG. 3: shows different types of containers,
- FIG. 4: shows possible insecticide containing fibers for nets,
- FIG. 5: shows the cross section of a tarpaulin.

### Detailed Description / Description of Preferred Embodiment

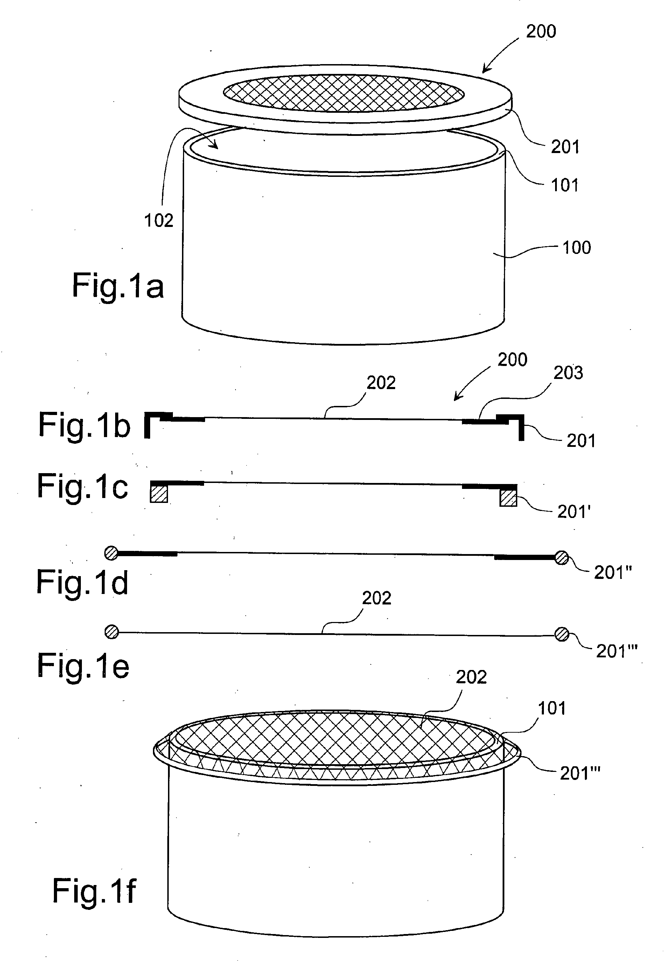

FIG. 1a illustrates a container 100 with an insect barrier 200 to cover the opening 102 of the container 100, for example a water jar. In a first embodiment, the insect barrier 200 comprises a frame 201 configured to receive the border 101 of the opening 102 in the frame 201. This embodiment of the insect barrier 200 is also shown in cross section in FIG. 1b. In use, the frame 201 as shown in FIG. 1b rests tightly on the border 101 of the container preventing insects to enter the container 100.

The invention covers not only nets, but also textile or textile filters in addition or instead of the net. For simplicity the invention will be explained in the case of a net, however without limiting the scope of the invention.

Within the frame 201, a net 202 prevents insects from entering the container 100. The rim of the net 202 includes a tarpaulin 203 which again is fastened to the frame 201. In case that the insect barrier 200 is to be removed from the container 100, it will typically be lifted and held at the frame 201. The tarpaulin 203 protects the net from being damaged under such circumstances. Alternatively, the net 202 may be fastened to the frame 201 directly. This is especially of advantage if a light weight structure is desired.

The frame may be constructed in a different way, which is illustrated in FIG. 1c. The shown frame 201' is configured to rest on the border 101 of the container 100, but does not receive the border of the opening in the container. This is of advantage, if the border 101 of the opening 102 of the container 100 is of rather broad dimension, for example if the wall of the container 100 is thick. The frame 201' may in this case rest on borders 101 of different sizes as long as the outer diameter of the frame 201' is larger than the inner diameter of the border 101.

In FIG. 1d, an insect barrier is shown with a frame 201", which is configured larger than the border 101 of the opening 102 of the container 100. In this case, after placement of the insect barrier 200 on the container 100, the tarpaulin 203 will rest on the border 101 of the container. The border 101 may be sharp edged, for example if the container 100 is an old petrol or diesel oil drum where the top part has been removed and which now is used as a water jar. In this case, the tarpaulin 203 prevents the net 202 form being damaged by the sharp edge of the border 101.

A light weight model of the insect barrier 200 is shown in FIG. 1e. In this case, a light weight frame 201''', typically a metal or stiff polymer frame holds the net 202 which spans over more than the outline of the container 100. When the insect barrier 200 is placed on the container 100, the net 202 covers the opening 102 of the container 100 and rests tightly on the border 101 of the opening 102. This situation is illustrated in FIG. 1f. The weight of the frame 201''' holds the net in place on the container 100.

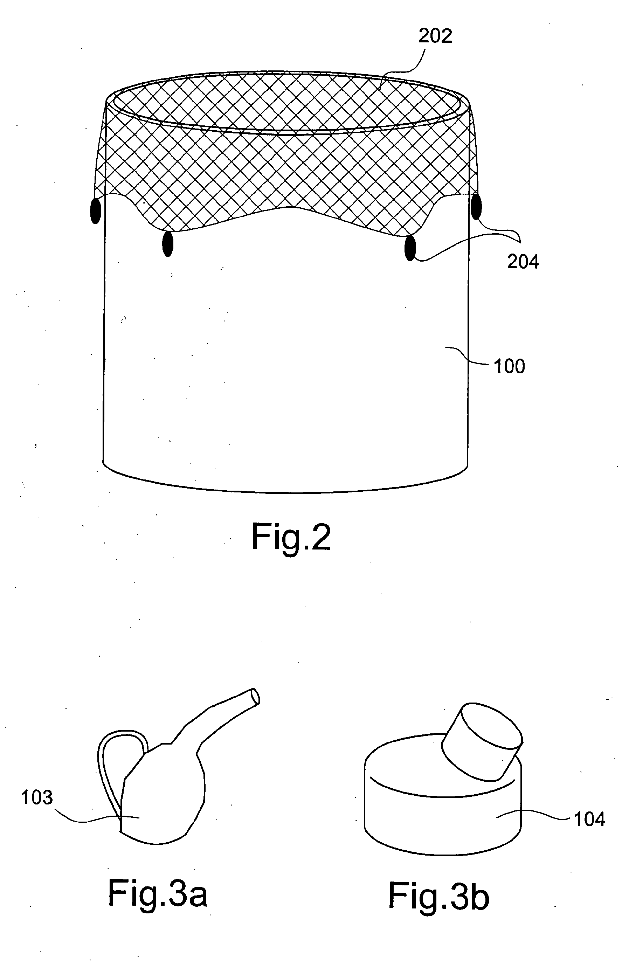

In its most simple form, the insect barrier only consists of a net 202 that is placed over the container 100, for example a water jar as shown in FIG. 2. In order to hold the net 202 in place, weights 204 may be fastened to the net for exerting downwards force on the net 202. Alternatively, the weights may accomplished by pockets fastened to the net, into which pockets sand, stones, liquids or other weight material has been inserted.

It has to be pointed out that the opening of the container may have other cross sections than circular. It may as well be a polygon, for example rectangular, or have any regular or irregular shape.

The invention may as well be used for other types of containers, for example a pitcher 103 as shown in FIG. 3a, or a container 104 with a wide opening 105 for other goods than liquids as shown in FIG. 3b. The pitcher 103 as shown in FIG. 3a may be filled and emptied without removing a mounted insect barrier, when the net covers the opening. In this case, however, if the water is used for drinking or food preparation, it is preferred that the insecticide contained in the net is insoluble in water such that the insecticide is not transferred to the water or aqueous liquid inside the container 103.

Other goods than liquid in a container with insect barrier according to the invention may be wet goods as meat or dry goods as dried meat or grains. Wet meat is attractive as a breeding place for a variety of insects, for example flies. Even dried meat is subject to attack by insects, for example *Dermestes haemorrhoidales*. Grains are attractive to a variety of other insects, for example *Ephestia kuhniella, Oryzaephilus surinamensis, Sitophilus granarius, S. Oryzae, Tenebrio melitor, Tribolium confusm, and T destructor.* For this kind of insects, the insect barrier may be chosen with a textile. A fabric would act as a physical barrier to these insects, where the content of insecticide may be higher than for nettings. In this connection, it has to be pointed out that more than 20% of the third world food storage is spoiled or consumed by insects and rodents every year.

An insect barrier according to the invention, however, may not protect goods efficiently from rats or mice that may bite holes into the insect barrier. However, by impregnating the insect barrier according to the invention with a bitter substance as Bitrex™, rats and mice are less likely to chew themselves through the insect barrier. Especially, due to the possibility of a higher amount of stored bitter substance, fabrics may be preferred to nettings in this case.

The insect barrier as shown in FIG. 1 may stay on the container when liquid as water is filled into the container, for example rain water. Also in this case, it is of advantage that the insecticide is insoluble in water and that the net 202 does not contain detergents which could bind the insecticide to water.

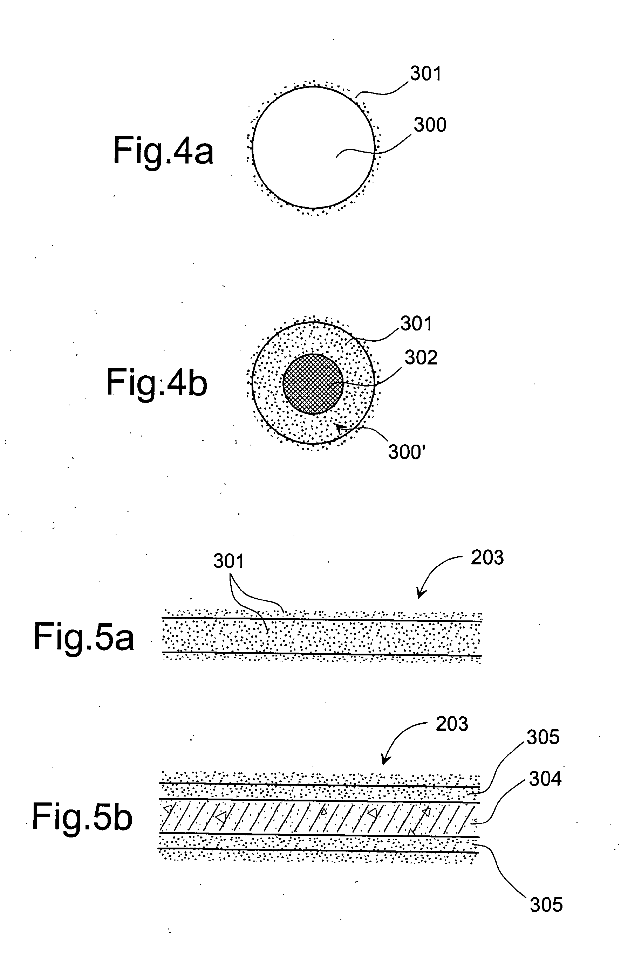

In FIG. 4a, the cross section of a fiber 300 for the net 200 is shown. The fiber 300 contains an insecticide 301 on the surface of the fiber 300, which is illustrated by dots. The fiber may also be constructed such, that the insecticide 301 is incorporated in the fiber 300' as shown in FIG 4b. The insecticide 301 may then migrate to the surface of the fiber 300' such that the fiber has an insecticidal property for a long time, as the release of the insecticide is relatively slow, though however fast enough to ensure a concentration of insecticide on the surface of the fiber 300' sufficiently high to have a lethal effect on insects touching the fiber 300'. For example, the fiber 300' may have an internal reservoir 302 with insecticide which is released for migration to the surface.

In order to limit the destroying influence of sunlight on the insecticide, a UV protecting agent may be incorporated in the fiber 300, 300' as well. For example, the UV protecting agent may be on the surface of the fiber, but it may also be incorporated inside the fiber 300' for migration to the surface in order to achieve a slow release with long time protection.

The tarpaulin 203 surrounding the net 202 may also contain an insecticide 301. Such a tarpaulin may be constructed such that the insecticide is contained inside the tarpaulin 203 material with migration of the insecticide 301 to the surface of the tarpaulin 203, this is illustrated in FIG. 5a. Alternatively, the tarpaulin may be a laminated structure with an inside reservoir 304 for release of insecticide for migration through the wall element 305 of the laminated tarpaulin 203.

Apart from *Aedes aegypti*, it is also of interest to prevent *Culex* from breeding in water jars. The invention is equally adaptable in this case.

## Claims

1. Method for providing an insect proof container for storing goods, preferably food or water, wherein said method comprises
- providing a container with an opening, preferably a substantially upwardly oriented opening,
- providing an insect barrier comprising a fine meshed net, textile, or textile based filter containing at least one insecticide,
- covering said opening with said insect barrier for prohibiting insects, preferably mosquitoes, to enter said container.

2. Method according to claim 1, wherein said method includes surface treatment of said net, textile, or textile based filter with an insecticide.

3. Method according to claim 1 or 2, wherein said method comprises providing a flexible barrier, optionally a net with a flexible rim, providing weights fastened to said flexible barrier for exerting downward force to said barrier for keeping said barrier stretched over said opening, said opening being upwardly oriented, with tight contact to the border of said opening when said opening is covered with said barrier.

4. Container with insect barrier, wherein said container has an opening, preferable a substantially upwardly oriented opening, which is covered by an insect barrier comprising a fine meshed net, textile, or textile based filter containing at least one insecticide.

5. Container with insect barrier according to claim 4, wherein said barrier comprises a frame configured to receive said opening of said container in said frame or a frame configured to rest tightly on the border of said opening.

6. Insect barrier for use by a method according to claim 1, 2 or 3 or for use by a container with insect barrier according to claim 4 or 5, wherein said insect barrier comprises a fine meshed net, textile, or textile based filter containing at least one insecticide.

7. Insect barrier for use by a method according to claim 1, 2 or 3 or for use by a container with insect barrier according to claim 4, wherein said insect barrier is flexible, optionally a flexible net with a flexible rim, and comprises means for exerting downward force to said barrier, for example weights fastened to said flexible barrier, for keeping said barrier stretched over an upwardly oriented opening, with tight contact to the border of said opening when said opening is covered with said barrier.

8. Insect barrier for use by a method according to claim 1, 2 or 3 or for use by a container with insect barrier according to claim 5, wherein said insect barrier comprises a frame configured to receive said opening of said container in said frame or a frame configured to rest tightly on the border of said opening.

9. Insect barrier according to claim 8, wherein said frame comprises two identical, rigid parts connected by flexible means for folding said two parts together to ease transportation of said insect barrier.

10. Insect barrier according to any one of the claims 6 - 9, wherein said net, textile, or textile based filter is water permeable.

11. Insect barrier according to any one of the claims 6 - 10, wherein said at least one insecticide is insoluble or hardly soluble in water.

12. Insect barrier according to any one of the claims 6 - 11, wherein said net contains at least one insecticides in the fibers of said net, textile, or textile based filter, said at least one insecticide being capable of migration to the surface of said fibers.

13. Insect barrier according to any one of the claims 6 - 12, wherein said net, textile, or textile based filter with at least one insecticide does not contain detergents dissolving any of said at least one insecticides by contact with water.

14. Insect barrier according to any one of the claims 6 - 13, wherein said net, textile, or textile based filter also contains a UV protective medium for protecting said at least one insecticide against UV disintegration.
